# EUROPEAN PATENT SPECIFICATION

(11) **EP 3 403 351 B1**
(45) Date of publication and mention of the grant of the patent: **18.11.2020**
(21) Application number: 17700319.1
(22) Date of filing: 10.01.2017
(51) Int. Cl.: H04L 1/18

(54) **FEEDBACK FOR DATA BLOCK TRANSMISSION**
FEEDBACK FÜR DATENBLOCKÜBERTRAGUNG
RÉTROACTION POUR LA TRANSMISSION DE BLOCS DE DONNÉES

(30) Priority: 11.01.2016 US 201662277242 P
(43) Date of publication of application: 21.11.2018
(73) Proprietor: Telefonaktiebolaget LM Ericsson (publ), 164 83 Stockholm (SE)
(72) Inventor: NADER, Ali, SE-212 42 Malmö (SE); RATHONYI, Béla, SE-234 37 Lomma (SE); STATTIN, Magnus, SE-194 44 Upplands Väsby (SE)
(74) Representative: Ericsson
(86) International application number: PCT/EP2017/050369
(87) International publication number: WO 2017/121708

(56) References cited:
- WO-A1-01/80475
- WO-A1-2009/096845
- PHILIPS: "Feedback of Channel Quality", 3GPP DRAFT; R2-071391, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Julian; 20070322, 22 March 2007 (2007-03-22), XP050134330, [retrieved on 2007-03-22]

## Description

### TECHNICAL FIELD

The present application relates generally to data block transmission from a transmitting radio node to a receiving radio node, and more particularly to feedback about the data block transmission.

### BACKGROUND

One technique for improving radio coverage in a wireless communication system involves transmitting data multiple times in repetition. The data repetitions are soft combined on the receiving side before decoding. Narrowband Internet of Things (NB-loT) systems will adopt this repetition technique for both user- and control-plane data in an effort to support coverage enhancements of up to 164 dB coupling loss. This will enable NB-loT systems to provide good coverage for devices located deep indoors, in underground basements, or even built into walls of a building with no possibility for battery charging.

Data repetition, however, proves costly in terms of radio resource consumption, interference generation, and device power consumption. For example, as many as 24 repetitions may be necessary to achieve coverage enhancement of 164 dB for some NB-loT channels, leading to transmission/reception times of 216 ms. Such a long reception time translates into substantial lengths of time that a device must activate its receiver and consume power.

The published patent application EP2919534 A1 discloses methods for improving power headroom reporting for UEs being in enhanced coverage mode. The UE may be configured to transmit a virtual power headroom report to the eNB, when in enhanced coverage mode, always or when at the same time being power limited. Moreover, the UE may determine a repetition level for transmissions in the uplink and/or determine a repletion level for transmissions in the downlink. The power headroom report can be used to transport this information by using preconfigured codepoints in the power headroom report.

### SUMMARY

According to the invention, a method implemented by a receiving node is provided according to independent claim 1. Moreover, a receiving node is provided according to independent claim 13. Further, a computer program is provided according to independent claim 14. A carrier according to claim 15, containing the computer program of claim 14, is also provided.

WO 2009/096845 A1 describes a method that enable continuous adaptive control of the number of autonomous HARQ retransmissions.

"Feedback of Channel Quality", Philips, 3GPP TSG RAN WG2#57bis, Malta 26-30 March 2007, R2-071391 describes that the UE could send back to the NodeB an indication of the number of retransmissions that were required to successfully decode the HARQ data. Reporting could be triggered based on the number of retransmissions exceeding a threshold.

WO 01/80475 A1 describes adaptive transmission control in a high data rate communication system.

### BRIEF DESCRIPTION OF THE DRAWINGS

Figure 1 is a block diagram of a wireless communication system that includes a transmitting radio node and a receiving radio node according to one or more embodiments.
Figures 2A-2B are block diagrams illustrating feedback and adaptation based on that feedback according to some embodiments.
Figures 3A-3B are block diagrams illustrating feedback and adaptation based on that feedback according to other embodiments.
Figure 4 is a block diagram illustrating feedback and adaptation based on that feedback according to still other embodiments.
Figure 5 is a block diagram of a wireless communication system that includes a transmitting radio node configured to cancel one or more scheduled repetitions according to some embodiments.
Figure 6 is a block diagram of a schedule of radio resources for early feedback according to one or more embodiments.
Figure 7 is a block diagram illustrating feedback indicating how many repetitions a receiving radio node will need to combine to successfully decode a data block, according to some embodiments.
Figure 8 is a logic flow diagram of a method implemented by a transmitting radio node according to some embodiments.
Figure 9 is a logic flow diagram of a method implemented by a receiving radio node according to some embodiments.
Figure 10 is a block diagram of a transmitting radio node according to some embodiments.
Figure 11 is a block diagram of a receiving radio node according to some embodiments.

### DETAILED DESCRIPTION

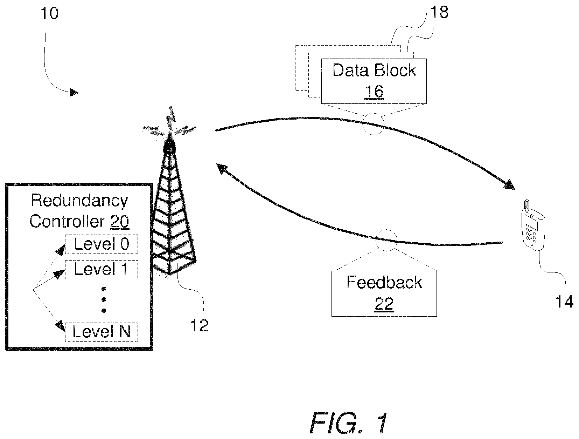

In the following description, any embodiments not falling within the scope of the appended claims are merely examples useful to the understanding of the invention. Figure 1 illustrates a wireless communication system 10 that includes a transmitting radio node 12 (e.g., a radio network node such as a base station) and a receiving radio node 14 (e.g., a wireless communication device). The transmitting radio node 12 transmits a data block 16 to the receiving radio node 14 over one or more physical radio resources (e.g., time-frequency resources). This data block 16 may be for instance a medium access control (MAC) protocol data unit (PDU) or a transport block, e.g., transmitted over a physical downlink shared channel (PDSCH) in NB-loT contexts. For example, the data block 16 may be a random access response message transmitted by a base station over a downlink shared channel in response to receiving a random access preamble from a wireless communication device.

In some embodiments, the transmitting radio node 12 transmits the data block 16 with a certain level of redundancy. For example, the transmitting radio node 12 may transmit the data block 16 as well as a number of repetitions 18 (i.e., redundant versions) of the data block 16 to the receiving radio node 14. The transmitting radio node 12 may transmit these repetitions contiguously in time, one after the other, as a group. Or the transmitting radio node 12 may transmit the repetitions over the course of multiple such groups that are non-contiguous in time and that each include multiple contiguous repetitions. As an example, the transmitting radio node 12 may transmit the repetitions over the course of a single, initial hybrid automatic repeat request (HARQ) transmission that includes multiple repetitions. Or, the transmitting radio node 12 may transmit the repetitions over the course of multiple such HARQ transmissions, including one or more HARQ re-transmissions that are transmitted after receiving a negative acknowledgement. Either way, the receiving radio node 14 can soft combine the repetitions to improve its ability to decode the data block 16.

Alternatively or additionally, the transmitting radio node 12 may transmit the data block 16 with a modulation and coding scheme (MCS) that adds a number of redundant bits or symbols to the transmission (i.e., according to the MCS's coding rate). No matter the type of redundancy, a redundancy controller 20 at the transmitting radio node 12 may control the redundancy level with which the data block 16 is transmitted by selecting that level from one of multiple different possible redundancy levels 0, 1...N (e.g., possible number of repetitions and/or possible MCS to use).

Irrespective of the level of redundancy used, if any, to transmit the data block 16, the receiving radio node 14 responds to that transmission by sending certain feedback 22 to the transmitting radio node 12. The feedback 22 indicates how many repetitions of a data block transmission the receiving radio node 14 needs to combine for successful data block decoding.

In some embodiments, for example, the receiving radio node 14 generates the feedback 22 based on how many repetitions the receiving radio node 14 needed to combine for successful decoding in the past. The feedback 22 in this regard may be based on how many repetitions 18 the receiving radio node 14 needed to combine to successfully decode data block 16, based on how many repetitions the receiving radio node 14 has needed to combine on average in the past to successfully decode a data block, or the like. Alternatively or additionally, the receiving radio node 14 may generate the feedback 22 based on a prediction of how many repetitions the receiving radio node 14 will need to combine for successful decoding in the future (e.g., based on how many repetitions 18 of data block 16 it will need to combine to successfully decode data block 16). No matter the basis on which the feedback 22 is generated, though, the receiving radio node 14 via the feedback 22 gives the transmitting radio node 12 an idea of how many repetitions the receiving radio node 14 needs for successful decoding, e.g., of any given data block or a particular data block 16.

Based on this feedback 22, the transmitting radio node 12 adapts the level of redundancy that the transmitting radio node 12 uses for data block transmission to the receiving radio node 14. The transmitting radio node 12 may for instance schedule or otherwise plan to transmit the data block 16 using one redundancy level, but then switch to using a different redundancy level for that same data block 16. Alternatively or additionally to this "mid-block" adaptation approach, the transmitting radio node 12 may adapt the redundancy level between different data blocks; that is, transmit one data block using a certain redundancy level but then switch to using a different redundancy level for transmitting a subsequent data block. Accordingly, redundancy level adaptation herein may be an adaptation within the same data block transmission or be an adaptation between different data block transmissions.

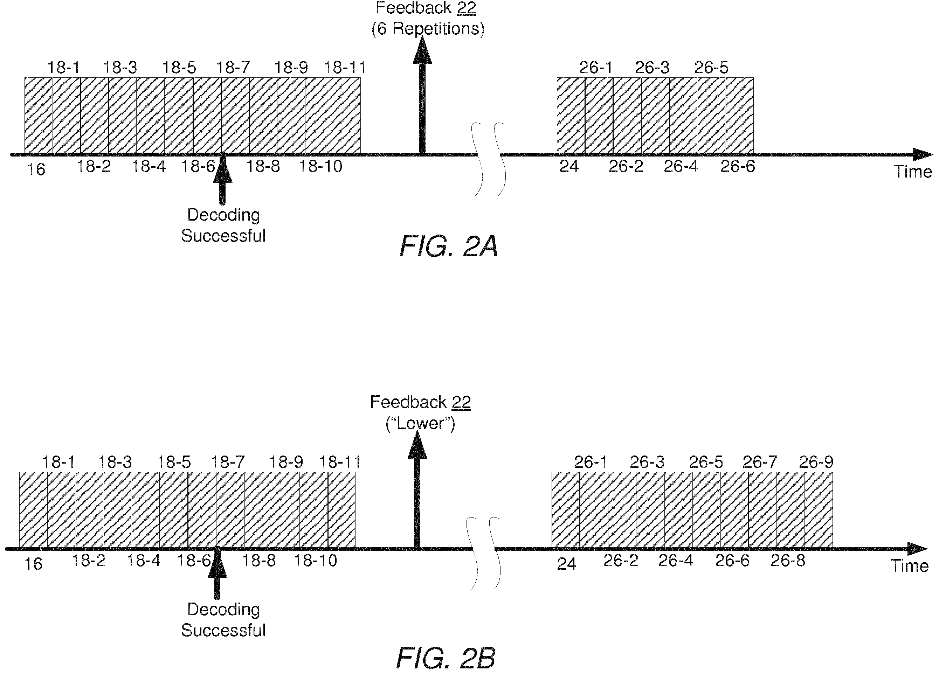

Figures 2A-2B illustrate a few examples in the context of embodiments where redundancy level adaptation occurs between different data block transmissions and in the form of adapting the number of repetitions used for data block transmission. As shown in Figure 2A, the transmitting radio node 12 transmits data block 16 to the receiving radio node 14, as well as eleven repetitions 18-1, 18-2,... 18-11 of that data block 16. After receipt of each repetition, the receiving radio node 14 combines that received repetition with the initially received data block 16 as well as any previously received repetitions in an attempt to successfully decode the data block 16.

Figure 2A shows the receiving radio node 14 successfully decoding the data block 16 in this way after combining six repetitions 18-1, 18-2...18-6. This means that the transmitting radio node 12 will have transmitted the next five repetitions 18-7, 18-8,... 18-11 in vain, since they were not needed for successful decoding. In an effort to alleviate this waste in radio resources for the next data block transmission, the receiving radio node 14 transmits feedback 22 to the transmitting radio node 12 after all repetitions have been transmitted, e.g., as part of hybrid automatic repeat request (HARQ) feedback or channel state information (CSI) feedback. According to this example, the feedback 22 specifically indicates the number of repetitions that the receiving radio node 14 needs for successful data block decoding. And the receiving radio node 14 determines this number of repetitions based on the number of repetitions that it needed to combine to successfully decode the data block 16 it just received; namely, six repetitions. That is, the receiving radio node 14 uses the number of repetitions needed to successfully decode the last received data block as being an appropriate measure for how many repetitions the receiving radio node 14 needs to successfully decode any given data block, including for instance those transmitted next. Based on this feedback 22, for example, the transmitting radio node 12 schedules a subsequent data block 24 to be transmitted to the receiving radio node 14 with only six repetitions, rather than eleven. That is, the transmitting radio node 12 reduces the level of redundancy with which the subsequent data block 24 is transmitted.

The feedback 22 may specifically indicate the number of needed repetitions in any number of ways. For example, the feedback 22 may explicitly indicate that number of repetitions. The feedback 22 may do so in either absolute terms (e.g., "6" in Figure 2A's example), or relative terms (e.g., "5 less than those transmitted").

Alternatively, the feedback 22 may explicitly indicate an index into a defined or preconfigured table that maps different indices to different numbers of repetitions. This table is defined or preconfigured at both the receiving radio node 14 and the transmitting radio node 12 so that an index indicated in the feedback 22 implicitly indicates a number of needed repetitions. In yet another alternative, the receiving radio node 14 selects, from among multiple different possible radio resources that are mapped to different numbers of repetitions, the radio resource that is mapped to the number of repetitions it needs for successful decoding. In this way, the feedback implicitly indicates the number of needed repetitions based on the feedback 22 being transmitted on a certain radio resource. Any sort of radio resource can be used to implicitly indicate the number of needed repetitions, including for instance a channel, subcarrier, time-frequency resource, etc.

Of course, although not shown, the feedback 22 may instead specifically indicate a range of repetitions that the receiving radio node 14 needs for successful data block decoding. For example, multiple different ranges of repetitions may be predefined, e.g., 0-5, 6-10, 11-15, etc. The feedback 22 in this case just indicates which of the predefined ranges the number of needed repetitions falls within. Although such an embodiment sacrifices some granularity in the feedback 22, the embodiment reduces the signalling overhead of the feedback 22.

Figure 2B illustrates other embodiments herein that reduce signalling overhead to an even greater extent. As shown, the feedback 22 non-specifically indicates whether the receiving radio node 14 needs some number of repetitions lower than the number of repetitions of the data block 16 transmitted to the receiving radio node 14. That is, the feedback just generally indicates to transmit a "lower" number of repetitions, without necessarily specifying how many lower. This consumes fewer radio resources to signal. However, without knowing exactly how many fewer repetitions to transmit, the transmitting radio network 12 may only be able to reduce the number of repetitions for the next data block transmission by a predefined amount or step (shown in Figure 2B as being 2 less repetitions than previously transmitted). This stepwise approach may therefore require multiple rounds of feedback to converge to a match between the number of repetitions transmitted and the number of repetitions needed for successful decoding. Additional degrees of "lower", such as "lower", "much lower", etc. may be introduced to speed up convergence, but at the expense of additional signalling overhead.

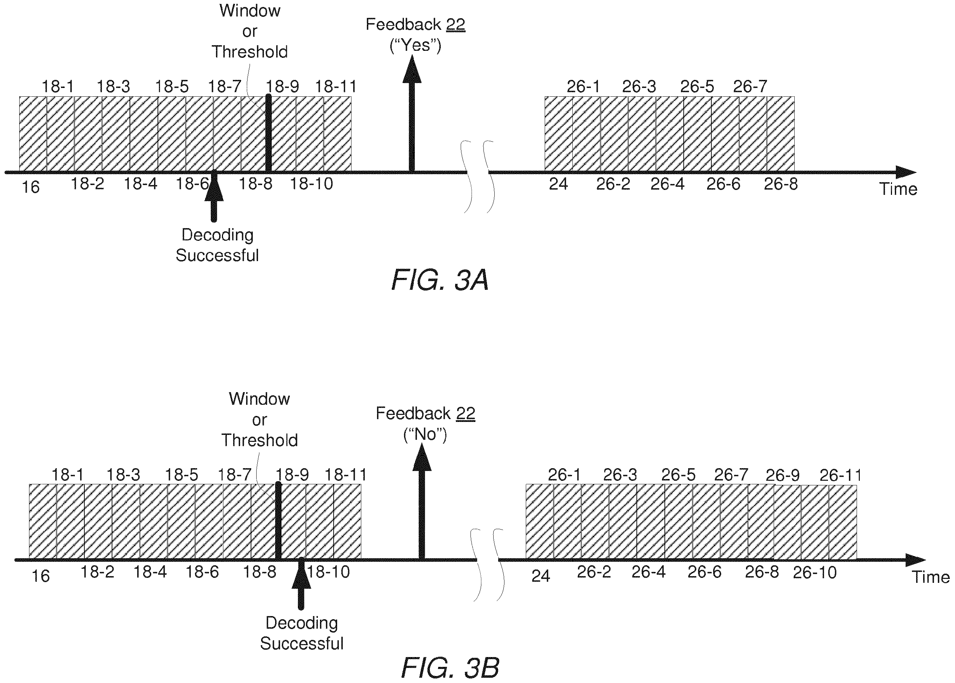

Figures 3A-3B illustrate still other embodiments for signalling how many repetitions the receiving radio node 14 needs for successful data block decoding. In these embodiments, the feedback 22 simply indicates whether (i.e., "yes" or "no") the receiving radio node 14 needs a number of repetitions less than or equal to a defined threshold. In one embodiment, this threshold is defined relative to the number of repetitions that the transmitting radio node 12 used to transmit the last data block 16. For example, the threshold may be a predetermined or configurable number of repetitions less than the number of repetitions transmitted. Or, the threshold may be a predetermined or configurable fraction of the number of repetitions transmitted. In Figures 3A-3B as an example the threshold is defined to be three repetitions less than the number of repetitions transmitted. With eleven repetitions transmitted, the threshold is therefore eight repetitions. Accordingly, when the receiving radio node 14 successfully decodes the data block 16 after combining only six repetitions as shown in Figure 3A, the feedback 22 affirmatively indicates that, "yes", successful decoding occurred using less than the threshold number of eight repetitions. The transmitting radio node 12 thereby adapts the number of repetitions that it uses to transmit a subsequent data block 24, by for example transmitting only eight repetitions 26-1, 26-2,...26-8 instead. By contrast, when the receiving radio node 14 successfully decodes the data block 16 after nine repetitions as in Figure 3B, the feedback indicates that, "no", successful decoding did not occur using less than the threshold number of eight repetitions. The transmitting radio node 12 in such case does not adapt the number of repetitions that it uses to transmit the subsequent data block 24.

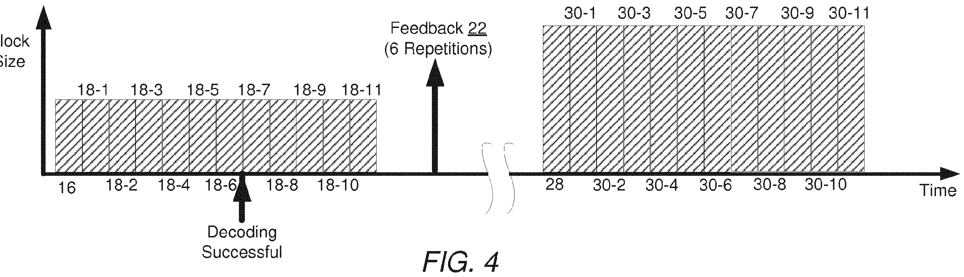

As alluded to above, though, adapting the number of repetitions is not the only way to adapt the level of redundancy used for a data block transmission. Figure 4 illustrates an example for adapting the redundancy level by adapting a modulation and coding scheme (MCS) that the transmitting radio node 12 uses for data block transmission. As shown, the receiving radio node 14 sends feedback 22 in the same way as in the example of Figure 2A, indicating that the receiving radio node 14 needs six repetitions. Rather than adapt the number of repetitions used to transmit a subsequent data block 28, the transmitting radio node 12 adapts the MCS used to transmit that subsequent data block 28. Specifically in the context of Figure 4's example, the transmitting radio node 12 adapts the MCS in a way that allows more data to be transmitted in the same number of repetitions, i.e., to fit more data in the same number of repetitions. To do so, the transmitting radio node 12 increases the size of the data block (e.g., transport block or MAC PDU) and effectively increases the code rate with which the subsequent data block 28 is transmitted, i.e., fewer redundant bits are used.

Note that no matter the type of redundancy adapted, or the form of the feedback 22, the feedback 22 in some embodiments only indicates how many repetitions the receiving radio node 14 needs for successful data block decoding, above and beyond the number of repetitions the transmitting radio node 12 already knows the receiving radio node 14 needs. For example, where the repetitions are transmitted over the course of multiple HARQ (re-)transmissions that each include multiple repetitions, the receiving radio node 14 transmits a negative acknowledgement after failing to decode the data block 16 with the repetitions received thus far. Based on this negative acknowledgement, the transmitting radio node 12 deduces that the receiving radio node 14 needs more repetitions than that transmitted so far (i.e., the number of repetitions transmitted thus far is the minimum number needed). Accordingly, when the receiving radio node 14 later succeeds in decoding the data block 16, it need only indicate the additional number of repetitions that it used in the latest HARQ re-transmission.

Thus, in some embodiments, multiple repetitions are included within any given HARQ transmission to the receiving radio node 14. The receiving radio node 14 successfully decodes the data block 16 based on combining the repetitions in one or more initial HARQ transmissions with only a portion of the repetitions in a subsequent HARQ transmission. In this case, the feedback 22 may indicate the number of repetitions in that portion (as opposed to the number of repetitions combined across all HARQ transmissions).

Consider the example from Figure 2A. If for instance twenty-four repetitions had already been previously transmitted to the receiving radio node 14 prior to the time shown in Figure 2A, the receiving radio node 14 would have sent the transmitting radio node 12 a negative acknowledgement indicating that those twenty-four repetitions were insufficient. After successfully decoding the data block 16 using these twenty-four previously received repetitions in combination with only seven of the twelve newly received repetitions 18 shown in Figure 2A (with data block 16 considered as a repetition in this modified example), the receiving radio node 14 generates the feedback 22 to indicate that it needs "7" repetitions for successful decoding. That is, the feedback 22 just indicates the number of repetitions needed above and beyond the twenty-four repetitions already known by the transmitting radio node 12 to be needed.

In another example of this concept, the receiving radio node 14 needs repetitions from one original transmission Tx₁ and two re-transmissions re-Txi and re-Tx₂ until it feeds back a HARQ acknowledgement (ACK). The original transmission and re-transmission each use eight repetitions each. Assume that during re-Tx₂, the receiving radio node 14 manages to decode the data block 16 already after two repetitions. Hence, an ACK and feedback 22 from which the transmitting radio node 12 can deduce the need for 2 repetitions (as per any of the aforementioned options) is provided to the transmitting radio node 12. As a result, the transmitting radio node 12 knows that the receiving radio node 14 needed in total 8+8+2=18 repetitions to successfully decode the data block. The transmitting radio node 12 can take this information into consideration for scheduling a next block of data. For example, in the next data block assignment, the receiving radio node 14 could be scheduled with 16 repetitions for a first transmission, and if NACKed, 2..4 repetitions are used in sub-sequent re-transmissions until ACKed. Note that the transmitting radio node 12 behavior is just exemplary and other strategies are possible such as already at the first transmission using 18 repetitions if resources are available. In this way, the number of repetitions may be adaptive in-between HARQ retransmissions so that the transmitting radio node 12 uses this information to better adapt the number of repetitions needed in the next transmissions (if close enough in time).

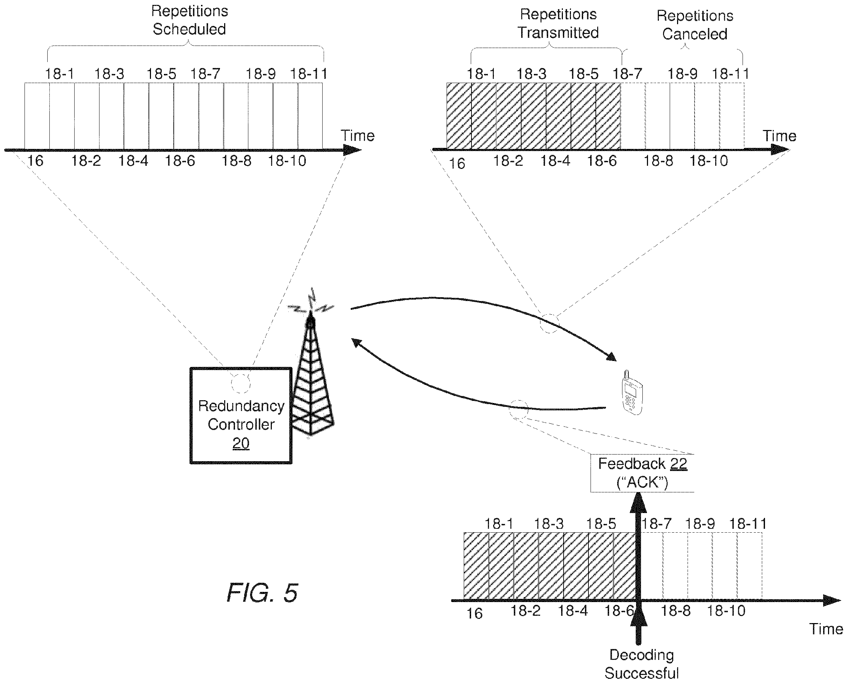

Figure 5 illustrates an example of other embodiments where redundancy level adaptation occurs within the same data block transmission. In this example, the transmitting radio node 12 schedules one or more repetitions 18 of the data block 16 to be transmitted to the receiving radio node 14 (here shown as repetitions 18-1, 18-2,...18-11). The transmitting radio node 12 may even transmit scheduling information to the receiving radio node 14 indicating that a certain number of repetitions have been scheduled for transmission. Such scheduling information may be indicated for instance by downlink control information (DCI) containing a downlink assignment on a narrowband enhanced physical downlink control channel (NB-EPDCCH) in NB-loT contexts. However, as the receiving radio node 14 attempts to decode the data block 16 using the received repetitions, the receiving radio node 14 successfully decodes the data block 16 prior to receiving one or more of the scheduled repetitions. Figure 5 shows for instance that the receiving radio node successfully decodes the data block 16 after receiving repetition 18-6, prior to receiving repetitions 18-7 through 18-11. Rather than wait until all scheduled repetitions have been received, the receiving radio node 14 goes ahead and transmits the feedback 22 responsive to successfully decoding the data block and prior to receiving one or more of the scheduled repetitions. This feedback may indicate for instance that the receiving radio node needs six repetitions for successful data block decoding. Ignoring decoding and processing delays for illustrative purposes, Figure 5 shows the receiving radio node 14 sending the feedback 22 immediately upon receiving repetition 18-6 and successfully decoding the data block 16 using that repetition. When the transmitting radio node 12 receives this feedback 22, it adapts the level of redundancy as a function of the number of scheduled repetitions that were transmitted prior to receiving the feedback 22. In some embodiments, for example, the transmitting radio node 12 does so by cancelling one or more of the scheduled repetitions 18 of the data block 16. As shown in Figure 5, for example, the transmitting radio node 12 is assumed to receive the feedback 22 immediately after transmitting repetition 18-6 (ignoring propagation delay for illustrative purposes). Based on the feedback 22 indicating that the receiving radio node 14 needs only six repetitions for successful decoding, the transmitting radio node 12 cancels further repetitions 18-7, 18-8,...18-11. Repetition adaptation in this case aims to match the number of repetitions transmitted to the number of repetitions actually needed by the receiving node 14 for successful data block decoding, e.g., so as to avoid transmitting unnecessary repetitions and thereby conserve radio resources and battery power. Indeed, in some embodiments, at the point of feedback 22 reception, the transmitting radio node 12 will terminate the transmission of repetitions and the subsequent system resources are made free to use for any other purpose.

Any of the above feedback 22 approaches may be used in the example of Figure 5. But in some embodiments the feedback 22 takes a different form. Specifically, in one or more embodiments, the feedback's content acknowledges successful decoding of the data block 16 (e.g., in the form of an HARQ ACK). It is the feedback's timing that is based on and indicates how many repetitions of the data block 16 the receiving radio node 14 combined to successfully decode the data block 16. In Figure 5's example, for instance, the receiving radio node 14 transmits an "early" acknowledgement as the feedback 22 immediately upon successful decoding, rather than waiting for all scheduled repetitions to arrive. When the transmitting radio node 12 receives the early acknowledgement feedback 22 before it has even sent some of the scheduled repetitions, the transmitting radio node 12 deduces or otherwise estimates how many repetitions the receiving radio node 14 needed based on the timing of its reception of the acknowledgement feedback 22. The transmitting radio node 12 may for instance estimate that a certain number of repetitions that have been transmitted so far were needed, e.g., all repetitions except the last X were needed, in order to account for propagation delay, processing delay, decoding delay, etc.

Early acknowledgement feedback 22 may be realized in any number of ways. In some embodiments, the feedback 22 comprises a dedicated non-contention based preamble code on a random access channel. Specifically, the receiving radio node 14 is assigned a dedicated non-contention based preamble code that will serve as an ACK. The receiving radio node 14 may be assigned the preamble code during connection setup between the transmitting radio node 12 and the receiving radio node 14, as part of a downlink assignment that assigns radio resources on which to receive the data block 16, or the like. Regardless, upon successful decoding, the receiving radio node performs a random access procedure using the assigned preamble code to inform the transmitting radio node 12 about the successful decoding before all repetitions were received.

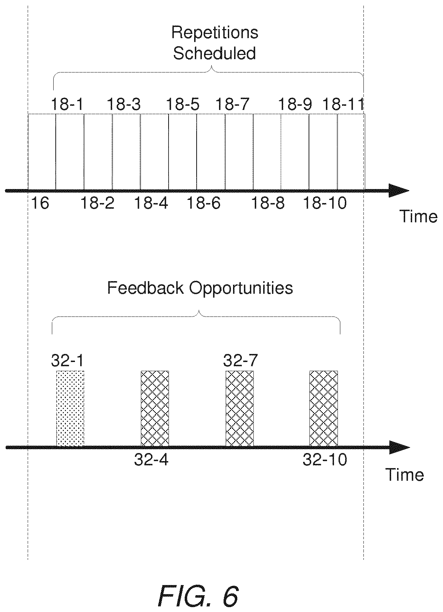

Alternatively, early acknowledgement feedback 22 may be realized by granting one or more radio resources to the receiving radio node 14 to use, if needed, to transmit the feedback 22 earlier than when all repetitions have been transmitted/received. The radio resource(s) in this regard are scheduled to occur prior to transmission of one or more repetitions of the data block 16. In some embodiments, this means granting the receiving radio node 14 more than just the one radio resource to be used after all repetitions have finished, and instead granting the receiving radio node 14 multiple radio resources that occur at different possible "candidate" times the feedback 22 could be sent. In fact, Figure 6 shows that in one or more embodiments the receiving radio node 14 is granted multiple radio resources 32-1, 32-4, 32-7, and 32-10 that occur at different times during which repetitions of the data block 16 are scheduled to be transmitted. These resources 32-1, 32-4, 32-7, and 32-10 function as different candidate resources on which the receiving radio node 14 is permitted to transmit the feedback 22. Presented with these different opportunities for transmitting the feedback 22, the receiving radio node 22 selects the candidate resource 32 that occurs soonest in time after successfully decoding the data block 16 so as to transmit the feedback 22 as fast as possible.

Note that the candidate radio resources 32 may be scheduled across the repetition transmission time frame using any number of scheduling strategies. As shown in Figure 6, the candidate radio resources 32 are scheduled to occur periodically. The first candidate radio resource may coincide with or otherwise correspond to transmission of the first repetition, e.g., as shown with candidate resource 32-1 coinciding with transmission of the first repetition 18-1. Alternatively, the first candidate radio resource may be delayed until later (e.g., until opportunity 32-4 in Figure 6), based on an estimate of the minimum number of repetitions the receiving radio node 14 would have to have in order to successfully decode the data block 16.

In one example, for instance, the transmitting radio node 12 schedules 24 repetitions to be transmitted over the course of 216ms. The receiving radio node 14 in such a case may be given a periodic grant starting after half of the repetitions; namely 12 (i.e., 108 ms or an offset compared to this, such as 4 ms to allow for decoding processing time). The grant period may then be after every 4^{th} repetition. That is, the "early" feedback opportunities would occur at 112 ms to indicate successful decoding after 12 repetitions, 148 ms to indicate successful decoding after 16 repetitions, and 184 ms to indicate successful decoding after 20 repetitions. An "on-time" feedback opportunity may still occur at 220 ms (4 ms after the last repetition) to indicate successful decoding after all repetitions, or to indicate decoding failure (NAK).

Of course, the number, time and/or frequency location, and/or periodicity of early feedback radio resources may vary from that described in these examples. In fact, the number, time and/or frequency location, and/or periodicity of early feedback radio resources may vary dynamically in some embodiments. For example, after each repetition, the periodicity and the amount of feedback resources may increase; periodicity because the receiving radio node 14 may earlier indicate as a result of more soft-combining after each repetition, and at the same time more resource due to a need of more repetitions (to signal as being needed). Moreover, the transmitting radio node 12 may choose to vary the resource scheduling in between HARQ re-transmissions.

Other possibilities are also envisioned in further embodiments. For example, the number, time and/or frequency location, periodicity, or any other characteristic of the feedback resources may be dynamically signalled to the receiving radio node 14. Such characteristics may include for instance an offset between the radio resources used to transmit the repetitions to the receiving radio node 14 (e.g., a physical downlink shared channel, PDSCH) and the feedback resources. Other characteristics may include the number of early feedback resources / grants and/or the number of repetitions in between early feedback resources / grants (i.e., the receiving radio node 14 will calculate the feedback resource occasions based on this signalling). For the example above with 216 ms transmission time for 24 repetitions, the signalling may indicate for instance 4 ms timing offset, 3 early feedback resources, with 3 repetitions between each early feedback resource.

In still other embodiments, the feedback 22 is transmitted in a separate procedure, e.g., in a new CSI content item such as "repetition info" or "rpi". The feedback 22 in this case may be transmitted together with other possible contents helping the transmitting radio node 12 in deciding upon the upcoming MCS.

In some embodiments, the receiving radio node 14 transmits the feedback 22 to the transmitting radio node 12 in a full-duplex manner, e.g., the receiving radio node 14 receives a repetition 18 at the same time as it transmits the feedback 22. In other embodiments, though, the receiving radio node 14 transmits the feedback 22 to the transmitting radio node 12 in a half-duplex manner. This may be the case for instance where the receiving radio node 14 is an NB-loT device operating in half-duplex mode. In such a case, the feedback resources 32 may be scheduled to occur during transmission gaps configured between some or all of the repetitions 18. Similar transmission gaps may be used for transmitting the feedback 22 in other embodiments as well, e.g., for transmitting a preamble code on a random access channel.

Note also that the feedback 22 may be transmitted to the transmitting radio node 12 over any sort of channel. For example, the channel may be dedicated for transmission of the feedback 22, may be dedicated for transmission of the feedback 22 as well as other control signalling, or may be shared for transmission of control signalling and "user" data. Where the receiving radio node 14 is a NB-loT device, for instance, the feedback 22 may be transmitted over a physical uplink shared channel (PUSCH) that transports both control and user data, as opposed to a legacy LTE physical uplink control channel (PUCCH) which may not exist in an NB-loT context.

Given the potential scarcity of resources available for the feedback 22, though, one or more embodiments herein limit the conditions under which the feedback 22 (at least "early" feedback) is transmitted. For example, in some embodiments, the feedback 22 is transmitted from the receiving radio node 14 to the transmitting radio node 12 only when the receiving radio node 14 successfully decodes the data block within a defined window of time since initial transmission of the data block 16, or by combining a number of repetitions less than a defined threshold. The defined window of time and/or defined repetition threshold may be set to ensure that meaningful performance improvement would result from adapting the redundancy level based on the feedback 22. For example, early feedback 22 indicating that repetitions could be reduced by just a small amount may not justify consuming radio resources to signal that feedback 22.

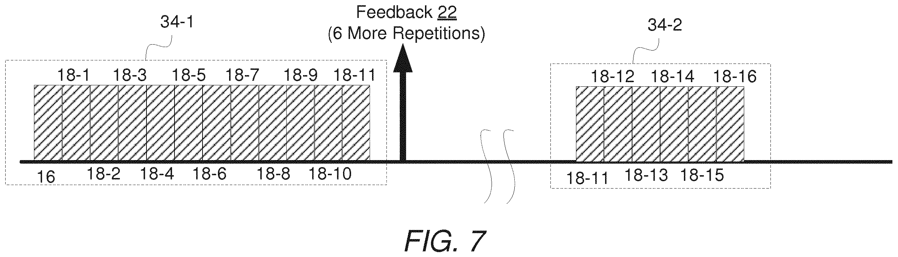

As alluded to previously, the feedback 22 in some embodiments is based on how many repetitions 18 of a data block 16 the receiving radio node 14 will need to combine to successfully decode that data block 16. Based on this feedback, the transmitting radio node 12 may adapt the number of forthcoming repetitions of the data block 16 that it schedules for transmission. Figure 7 illustrates one example of such embodiments.

As shown, the transmitting radio node 12 initially schedules a first HARQ transmission 34-1 that includes the data block 16 as well as eleven repetitions 18-1, 18-2,...18-11. After failing to successfully decode the data block 16 by combining these repetitions, though, the receiving radio node 14 transmits feedback 22 to the transmitting radio node 12. Notably, the receiving radio node 14 generates the feedback 22 to indicate how many more repetitions 18 of the data block 16 the receiving radio node 14 will need to combine in order to successfully decode the data block 16. The receiving radio node 14 may predict this number of additional repetitions needed in any number of ways. The receiving radio node 14 may for instance base its prediction on historical data, e.g., based on how many repetitions 18 it has needed in the past (on average or under certain conditions). Alternatively or additionally, the receiving radio node 14 may maintain a history of reception (channel) conditions and the number of repetitions respectively needed under those different conditions, and then map the current reception conditions to a number of additional repetitions needed. In any event, though, the transmitting radio node 12 upon receiving this feedback 22 may schedule a different number of repetitions of the data block 16 to be transmitted to the receiving radio node 14 in a subsequent HARQ transmission. As shown, for instance, the transmitting radio node 12 only transmits 6 repetitions in the next HARQ transmission 34-2.

Note that in some embodiments the number of HARQ processes is reduced to one single HARQ process (compared to 8 in legacy LTE). This means that scheduling may become more cumbersome due to the longer transmission times and varying amount of repetitions between users and different physical channels.

Various advantages of embodiments herein for example include higher system capacity and/or spectral efficiency, less interference, and lower power consumption.

In NB-loT contexts, the data block 16 may be a message transmitted as part of random access, e.g., a random access response (RAR) transmitted by a base station in response to receiving a random access attempt by a user equipment (UE). In this case, the feedback 22 may indicate when the UE has managed to decode a message such as the RAR message. With such feedback, the number of repetitions may be reduced, thus reducing interference and latency for the random access process. The information on the number of repetitions needs for decoding the RAR may be used to adapt the number of repetitions used for remaining messages in the random access process, e.g., the contention-resolution message (Msg4). In general, therefore, some embodiments herein introduce UE feedback indicating when the UE manages to decode a data block. These embodiments may selectively apply for coverage levels with a large number of repetitions. In some embodiments, the base station requests such feedback from the UE.

Moreover, despite particular applicability to NB-loT in some examples, it will be appreciated that the techniques may be applied to other wireless networks, including enhancements for machine type communication (eMTC) as well as to successors of the E-UTRAN. Thus, references herein to signals using terminology from the 3GPP standards for LTE should be understood to apply more generally to signals having similar characteristics and/or purposes, in other networks.

A radio node herein is any type of node (e.g., a base station or wireless communication device) capable of communicating with another node over radio signals. A radio network node is any type of radio node within a wireless communication network, such as a base station. A wireless communication device 14 is any type of radio node capable of communicating with a radio network node over radio signals. A wireless communication device 14 may therefore refer to a machine-to-machine (M2M) device, a machine-type communications (MTC) device, a NB-loT device, etc. The wireless device may also be a UE, however it should be noted that the UE does not necessarily have a "user" in the sense of an individual person owning and/or operating the device. A wireless device may also be referred to as a radio device, a radio communication device, a wireless terminal, or simply a terminal - unless the context indicates otherwise, the use of any of these terms is intended to include device-to-device UEs or devices, machine-type devices or devices capable of machine-to-machine communication, sensors equipped with a wireless device, wireless-enabled table computers, mobile terminals, smart phones, laptop-embedded equipped (LEE), laptop-mounted equipment (LME), USB dongles, wireless customer-premises equipment (CPE), etc. In the discussion herein, the terms machine-to-machine (M2M) device, machine-type communication (MTC) device, wireless sensor, and sensor may also be used. It should be understood that these devices may be UEs, but are generally configured to transmit and/or receive data without direct human interaction.

In an loT scenario, a wireless communication device as described herein may be, or may be comprised in, a machine or device that performs monitoring or measurements, and transmits the results of such monitoring measurements to another device or a network. Particular examples of such machines are power meters, industrial machinery, or home or personal appliances, e.g. refrigerators, televisions, personal wearables such as watches etc. In other scenarios, a wireless communication device as described herein may be comprised in a vehicle and may perform monitoring and/or reporting of the vehicle's operational status or other functions associated with the vehicle.

Furthermore, in an NB-loT context, it may be the case that, to support lower manufacturing costs for NB-loT devices, the transmission bandwidth is reduced to one physical resource block (PRB) of size 180KHz. Both frequency division duplexing (FDD) and TDD are supported. For FDD (i.e. the transmitter and receiver operate at different carrier frequencies) only half-duplex mode needs to be supported in the UE. The lower complexity of the devices (e.g. only one transmission/receiver chain) means that a small number of repetitions might be needed also in normal coverage. Further, to alleviate UE complexity, the working assumption may be to have cross-subframe scheduling. That is, a transmission is first scheduled on Enhanced Physical DL Control Channel (E-PDCCH aka M-EPDCCH) and then the first transmission of the actual data on the Physical DL Shared Channel (PDSCH) is carried out after the final transmission of the M-EPDCCH.

One or more embodiments may generally, in addition to CSI/CQI feedback, also or instead indicate/feedback from a UE to the network the amount of repetitions needed for successful decoding of a data block. This way, the network can adapt upcoming data transmissions based on that feedback.

Any of the embodiments herein however may be implemented selectively, e.g., under certain conditions or circumstances only. For example, some embodiments herein are intended to be implemented only for a receiving radio node 14 in low coverage scenarios. Thus, for a receiving radio node 14 in good coverage, other feedback may be transmitted instead, including for instance CSI type reports used for link adaptation.

While often exemplified with a base station as the transmitting radio node 12 and a wireless communication device as the receiving radio node 14 (e.g., in a downlink context), embodiments herein are equally applicable to the converse (e.g., in an uplink context).

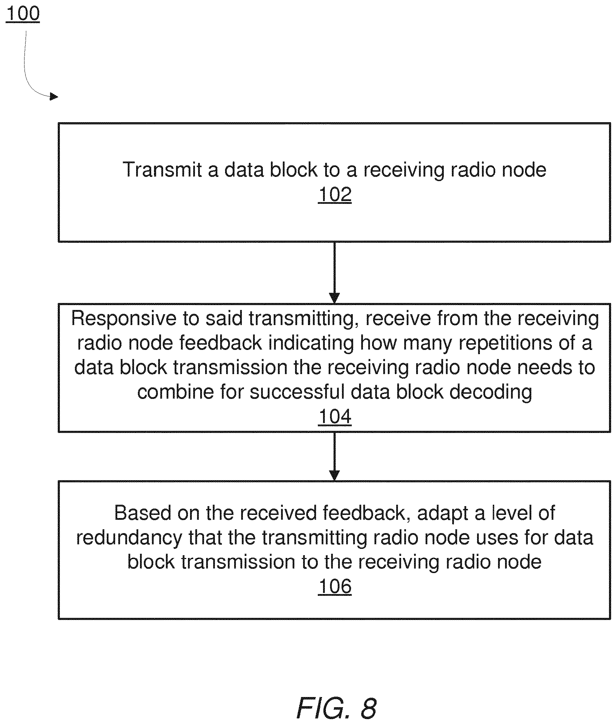

In view of the various modifications and variations described above, those skilled in the art will appreciate that the transmitting radio node 12 herein may perform the processing 100 shown in Figure 8. This processing 100 comprises transmitting a data block 16 to a receiving radio node 14 (Step 102). The processing 100 further entails, responsive to that transmitting, receiving from the receiving radio node 14 feedback 22 indicating how many repetitions of a data block transmission the receiving radio node 14 needs to combine for successful data block decoding (Step 104). The processing 100 also comprises, based on the received feedback 22, adapting a level of redundancy that the transmitting radio node 12 uses for data block transmission to the receiving radio node 14 (Step 106).

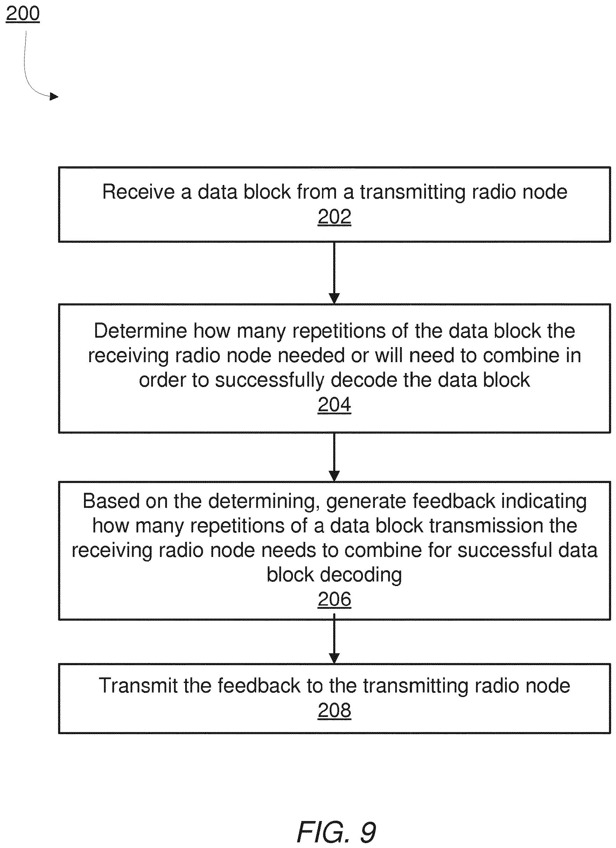

Those skilled in the art will also appreciate that the receiving radio node 14 may perform the processing 200 shown in Figure 9. The processing 200 comprises receiving a data block 16 from a transmitting radio node 12 (Step 202). The processing 200 further entails determining how many repetitions of the data block 16 the receiving radio node 14 needed or will need to combine in order to successfully decode the data block 16 (Step 204). The processing 204 also comprises, based on that determining, generating feedback 22 indicating how many repetitions of a data block transmission the receiving radio node 12 needs to combine for successful data block decoding (Step 206). Moreover, processing 200 includes transmitting the feedback 22 to the transmitting radio node 12 (Step 208).

Note that the transmitting radio node 12 as described above may perform the processing herein by implementing any functional means or units. In one embodiment, for example, the transmitting radio node 12 comprises respective circuits or circuitry configured to perform the steps shown in Figure 8. The circuits or circuitry in this regard may comprise circuits dedicated to performing certain functional processing and/or one or more microprocessors in conjunction with memory. In embodiments that employ memory, which may comprise one or several types of memory such as read-only memory (ROM), random-access memory, cache memory, flash memory devices, optical storage devices, etc., the memory stores program code that, when executed by the one or more processors, carries out the techniques described herein.

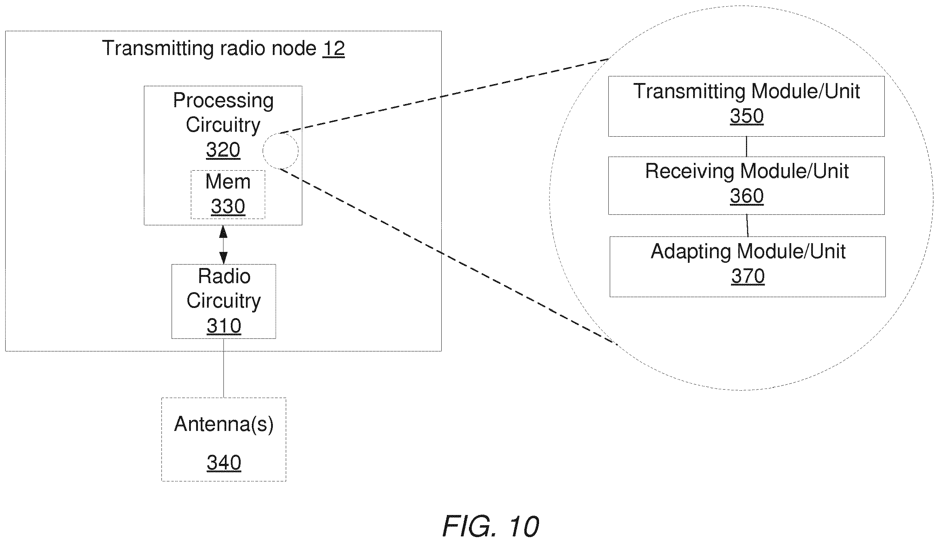

Figure 10 illustrates additional details of a transmitting radio node 12 in accordance with one or more embodiments. As shown, the transmitting radio node 12 includes processing circuitry 320 and radio circuitry 310. The radio circuitry 310 is configured to transmit via one or more antennas 340. The processing circuitry 320 is configured to perform processing described above, e.g., in Figure 8, such as by executing instructions stored in memory 330. The processing circuitry 320 in this regard may implement certain functional means or units.

For example, the transmitting radio node 12 in some embodiments implements various functional means or units, e.g., via the processing circuitry 320. These functional means or units, e.g., for implementing the method in Figure 8, include for instance a transmitting module or unit 350 for transmit a data block to a receiving radio node. Further included is a receiving module or unit 360 for, responsive to transmitting the data block, receiving from the receiving radio node feedback indicating how many repetitions of a data block transmission the receiving radio node needs to combine for successful data block decoding. The transmitting radio node 12 also includes an adapting module or unit 370 for, based on the received feedback, adapting a level of redundancy that the transmitting radio node 12 uses for data block transmission to the receiving radio node.

The receiving radio node 14 as described above may similarly perform the processing herein by implementing any functional means or units. In one embodiment, for example, the receiving radio node 14 comprises respective circuits configured to perform the steps shown in Figure 9. The circuits in this regard may comprise circuits dedicated to performing certain functional processing and/or one or more microprocessors in conjunction with memory. In embodiments that employ memory, which may comprise one or several types of memory such as read-only memory (ROM), random-access memory, cache memory, flash memory devices, optical storage devices, etc., the memory stores program code that, when executed by the one or more processors, carries out the techniques described herein.

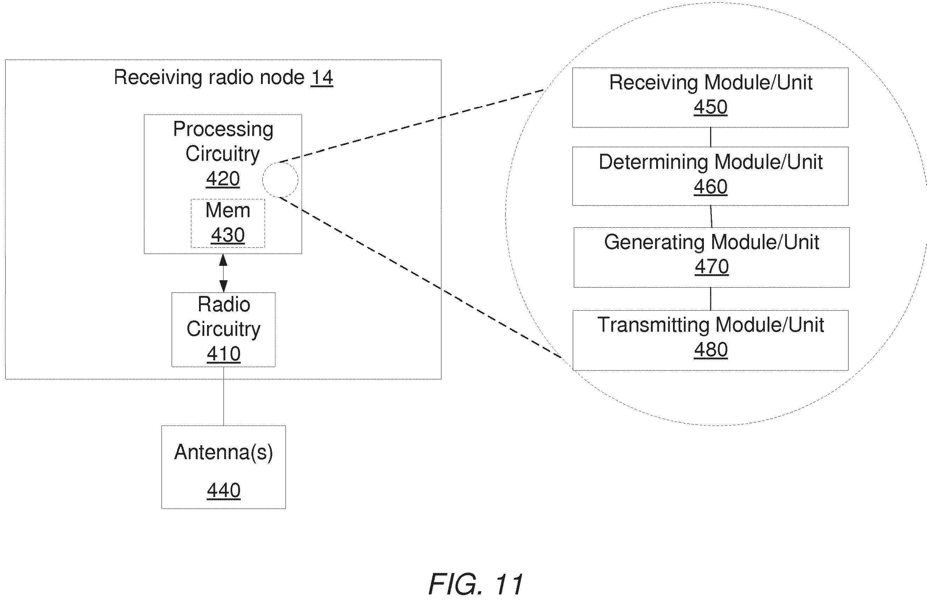

Figure 11 illustrates additional details of a receiving radio node 14 in accordance with one or more embodiments. As shown, the receiving radio node 14 includes processing circuitry 420 and radio circuitry 410. The radio circuitry 410 is configured to transmit via one or more antennas 440. The processing circuitry is configured to perform processing described above, e.g., in Figure 9, such as by executing instructions stored in memory 430. The processing circuitry 420 in this regard may implement certain functional means or units.

For example, the receiving radio node 14 in some embodiments implement various functional means or units, e.g., via the processing circuitry 420. These functional means or units, e.g., for implementing the method in Figure 9, include for instance a receiving module or unit 450 for receive a data block from a transmitting radio node 12. Further included is a determining module or unit 460 for determine how many repetitions of the data block the receiving radio node 14 needed or will need to combine in order to successfully decode the data block. Also included is a generating module or unit 470 for, based on the determination, generating feedback indicating how many repetitions of a data block transmission the receiving radio node 14 needs to combine for successful data block decoding. Further included is a transmitting module or unit 480 for transmitting the feedback to the transmitting radio node 12.

Those skilled in the art will also appreciate that embodiments herein further include corresponding computer programs.

A computer program comprises instructions which, when executed on at least one processor of a node, cause the node to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of a (transmitting or receiving) radio node, cause the radio node to perform as described above.

Embodiments further include a computer program product comprising program code portions for performing the steps of any of the embodiments herein when the computer program product is executed by a computing device. This computer program product may be stored on a computer readable recording medium.

Those skilled in the art will recognize that the present invention may be carried out in other ways than those specifically set forth herein without departing from the scope of the appended claims.

## Claims

1. A method implemented by a receiving radio node (14), the method comprising:
receiving (202) a data block (16) from a transmitting radio node (12);
determining (204) how many repetitions of the data block (16) the receiving radio node (14) needed or will need to combine in order to successfully decode the data block (16);
based on said determining, generating (206) feedback (22) indicating how many repetitions of a data block transmission the receiving radio node (14) needs to combine for successful data block decoding; and
transmitting (208) the feedback (22) to the transmitting radio node (12), wherein the feedback (22) is transmitted from the receiving radio node (14) to the transmitting radio node (12) only when the receiving radio node (14) successfully decodes the data block (16) either within a defined window of time since initial transmission of the data block (16) or by combining a number of repetitions less than a defined threshold, wherein the threshold corresponds to a number of repetitions less than the number of repetitions that the transmitting radio node used to transmit a previous data block.

2. The method claim 1, further comprising receiving scheduling information indicating that the transmitting radio node (12) has scheduled a number of repetitions of the data block (16) to be transmitted to the receiving radio node (14), and successfully decoding the data block (16) prior to receiving one or more of the scheduled repetitions, and wherein said transmitting comprises transmitting the feedback (22) responsive to successfully decoding the data block (16) and prior to receiving one or more of the scheduled repetitions.

3. The method of any of claims 1-2, wherein the feedback's content acknowledges successful decoding of the data block (16) and the feedback's timing is based on how many repetitions of the data block (16) the receiving radio node (14) combined to successfully decode the data block (16).

4. The method of claim 3, wherein the feedback (22) comprises a dedicated non-contention based preamble code on a random access channel.

5. The method of claim 3, wherein the feedback (22) is transmitted on a radio resource that is granted to the receiving radio node (14) and that is scheduled to occur prior to transmission of one or more repetitions of the data block (16).

6. The method of claim 5, wherein the receiving radio node (14) is granted multiple radio resources that occur at different times during which repetitions of the data block (16) are scheduled to be transmitted, as different candidate resources on which the receiving radio node (14) is permitted to transmit the feedback.

7. The method of any of claims 1-2, wherein the feedback non-specifically indicates whether the receiving radio node (14) needs some number of repetitions lower than a number of repetitions of the data block (16) transmitted to the receiving radio node (14).

8. The method of any of claims 1-2, wherein the feedback specifically indicates a number of repetitions, or a range of repetitions, that the receiving radio node (14) needs for successful data block decoding.

9. The method of any of claims 1-2, wherein the feedback (22) indicates whether the receiving radio node (14) needs a number of repetitions less than a defined threshold.

10. The method of any of claims 1-9, wherein multiple repetitions are included within any given hybrid automatic repeat request, HARQ, transmission to the receiving radio node (14).

11. The method of claim 10, wherein the receiving radio node (14) successfully decodes the data block (16) based on combining the repetitions in one or more initial HARQ transmissions with only a portion of the repetitions in a subsequent HARQ transmission, and wherein the feedback (22) indicates the number of repetitions in said portion.

12. The method of any of claims 1-11, wherein the data block (16) is transmitted on a physical downlink shared channel, PDSCH, as a narrowband Internet of Things, IoT, transmission.

13. A receiving radio node (14) configured to:
receive a data block (16) from a transmitting radio node (12);
determine how many repetitions of the data block (16) the receiving radio node (14) needed or will need to combine in order to successfully decode the data block (16);
based on the determination, generate feedback (22) indicating how many repetitions of a data block transmission the receiving radio node (14) needs to combine for successful data block decoding; and
transmit the feedback (22) to the transmitting radio node (12) only when the receiving radio node (14) successfully decodes the data block (16) either within a defined window of time since initial transmission of the data block (16) or by combining a number of repetitions less than a defined threshold, wherein the threshold corresponds to a number of repetitions less than the number of repetitions that the transmitting radio node used to transmit a previous data block.

14. A computer program comprising instructions which, when executed by at least one processor of a node, causes the node to perform the method of any of claims 1-12.

15. A carrier containing the computer program of claim 14, wherein the carrier is one of an electronic signal, optical signal, radio signal, or computer readable storage medium.

## Patentansprüche

1. Verfahren, das durch einen empfangenden Funkknoten (14) implementiert wird, das Verfahren umfassend:
Empfangen (202) eines Datenblocks (16) von einem übertragenden Funkknoten (12);
Bestimmen (204), wie viele Wiederholungen des Datenblocks (16) der empfangende Funkknoten (14) zum Kombinieren benötigte oder benötigen wird, um den Datenblock (16) erfolgreich zu decodieren;
basierend auf der Bestimmung, Erzeugen (206) von Feedback (22), das angibt, wie viele Wiederholungen einer Datenblockübertragung der empfangende Funkknoten (14) zum Kombinieren benötigte oder benötigen wird, um den Datenblock erfolgreich zu decodieren; und
Übertragen (208) des Feedbacks (22) an den übertragenden Funkknoten (12), wobei das Feedback (22) von dem empfangenden Funkknoten (14) zu dem übertragenden Funkknoten (12) nur dann übertragen wird, wenn der empfangende Funkknoten (14) den Datenblock (16) entweder innerhalb eines definierten Zeitfensters seit anfänglicher Übertragung des Datenblocks (16) oder durch Kombinieren einer Anzahl von Wiederholungen, die niedriger als ein definierter Schwellenwert ist, erfolgreich decodiert, wobei der Schwellenwert einer Anzahl von Wiederholungen entspricht, die niedriger als die Anzahl von Wiederholungen ist, die der übertragende Funkknoten zum Übertragen eines vorherigen Datenblocks verwendet hat.

2. Verfahren Anspruch 1, weiter umfassend Empfangen von Planungsinformationen, die angeben, dass der übertragende Funkknoten (12) eine Anzahl von Wiederholungen des zu übertragenden Datenblocks (16) zu dem empfangenden Funkknoten (14) geplant hat, und erfolgreiches Decodieren des Datenblocks (16) vor Empfang einer oder mehrerer der geplanten Wiederholungen, und wobei die Übertragung Übertragen des Feedbacks (22) in Reaktion auf erfolgreiches Decodieren des Datenblocks (16) und vor Empfang einer oder mehrerer der geplanten Wiederholungen umfasst.

3. Verfahren nach einem der Ansprüche 1-2, wobei der Inhalt des Feedbacks ein erfolgreiches Decodieren des Datenblocks (16) bestätigt und die Zeitsteuerung des Feedbacks darauf beruht, wie viele Wiederholungen des Datenblocks (16) der empfangende Funkknoten (14) für ein erfolgreiches Decodieren des Datenblocks (16) kombiniert hat.

4. Verfahren nach Anspruch 3, wobei das Feedback (22) einen dedizierten, nicht auf Konkurrenz beruhenden Präambelcode auf einem Direktzugriffkanal umfasst.

5. Verfahren nach Anspruch 3, wobei das Feedback (22) auf einer Funkressource übertragen wird, die dem empfangenden Funkknoten (14) gewährt wird und die geplant ist, vor Übertragung einer oder mehrerer der geplanten Wiederholungen des Datenblocks (16) aufzutreten.

6. Verfahren nach Anspruch 5, wobei dem empfangenden Funkknoten (14) mehrere Funkressourcen, die zu verschiedenen Zeiten auftreten, in welchen Wiederholungen des Datenblocks (16) zur Übertragung geplant sind, als verschiedene Kandidatenressourcen gewährt werden, auf welchen der empfangende Funkknoten (14) das Feedback übertragen darf.

7. Verfahren nach einem der Ansprüche 1-2, wobei das Feedback nicht spezifisch angibt, ob der empfangende Funkknoten (14) eine gewisse Anzahl von Wiederholungen benötigt, die niedriger als eine Anzahl von Wiederholungen des Datenblocks (16) ist, die zu dem empfangenden Funkknoten (14) übertragen werden.

8. Verfahren nach einem der Ansprüche 1-2, wobei das Feedback spezifisch eine Anzahl von Wiederholungen oder einen Bereich von Wiederholungen angibt, die der empfangende Funkknoten (14) zum erfolgreichen Decodieren des Datenblocks (16) benötigt.

9. Verfahren nach einem der Ansprüche 1-2, wobei das Feedback (22) angibt, ob der empfangende Funkknoten (14) eine Anzahl von Wiederholungen benötigt, die kleiner als ein definierter Schwellenwert ist.

10. Verfahren nach einem der Ansprüche 1-9, wobei mehrere Wiederholungen innerhalb einer gegebenen Übertragung einer hybriden, automatisierten Wiederholungsanfrage, HARQ, zu dem empfangenden Funkknoten (14) beinhaltet sind.

11. Verfahren nach Anspruch 10, wobei der empfangende Funkknoten (14) den Datenblock (16) basierend auf Kombinieren der Wiederholungen in einer oder mehreren anfänglichen HARQ-Übertragungen erfolgreich decodiert, mit nur einem Teil der Wiederholungen in einer anschließenden HARQ-Übertragung, und wobei das Feedback (22) die Anzahl von Wiederholungen in diesem Teil angibt.

12. Verfahren nach einem der Ansprüche 1-11, wobei der Datenblock (16) auf einem gemeinsamen physischen Abwärtsstreckenkanal, PDSCH, als eine Schmalband-Internet der Dinge-, loT, -Übertragung übertragen wird.

13. Empfangender Funkknoten (14), der konfiguriert ist zum:
Empfangen eines Datenblocks (16) von einem übertragenden Funkknoten (12);
Bestimmen, wie viele Wiederholungen des Datenblocks (16) der empfangende Funkknoten (14) zum Kombinieren benötigte oder benötigen wird, um den Datenblock (16) erfolgreich zu decodieren;
basierend auf der Bestimmung, Erzeugen von Feedback (22), das angibt, wie viele Wiederholungen einer Datenblockübertragung der empfangende Funkknoten (14) zum Kombinieren zur erfolgreichen Datenblockdecodierung benötigt; und
Übertragen des Feedbacks (22) an den übertragenden Funkknoten (12) nur dann, wenn der empfangende Funkknoten (14) den Datenblock (16) entweder innerhalb eines definierten Zeitfensters seit anfänglicher Übertragung des Datenblocks (16) oder durch Kombinieren einer Anzahl von Wiederholungen, die niedriger als ein definierter Schwellenwert ist, erfolgreich decodiert, wobei der Schwellenwert einer Anzahl von Wiederholungen entspricht, die niedriger als die Anzahl von Wiederholungen ist, die der übertragende Funkknoten zum Übertragen eines vorherigen Datenblocks verwendet hat.

14. Computerprogramm, umfassend Anweisungen, die, wenn sie durch mindestens einen Prozessor eines Knotens ausgeführt werden, den Knoten veranlassen, das Verfahren nach einem der Ansprüche 1-12 durchzuführen.

15. Träger, der das Computerprogramm nach Anspruch 14 enthält, wobei der Träger eines von einem elektronischen Signal, optischen Signal, Funksignal oder computerlesbaren Speichermedium ist.

## Revendications

1. Procédé implémenté par un nœud radio récepteur (14), le procédé comprenant les étapes consistant à :
recevoir (202) un bloc de données (16) à partir d'un nœud radio émetteur (12) ;
déterminer (204) combien de répétitions du bloc de données (16) le nœud radio récepteur (14) avait besoin ou aura besoin de combiner de façon à décoder avec succès le bloc de données (16) ;
sur la base de ladite détermination, générer (206) une rétroaction (22) indiquant combien de répétitions d'une émission de bloc de données le nœud radio récepteur (14) a besoin de combiner pour obtenir un décodage de bloc de données réussi ; et
émettre (208) la rétroaction (22) vers le nœud radio émetteur (12), dans lequel la rétroaction (22) est émise du nœud radio récepteur (14) vers le nœud radio émetteur (12) uniquement lorsque le nœud radio récepteur (14) décode avec succès le bloc de données (16) soit dans une fenêtre temporelle définie depuis l'émission initiale du bloc de données (16), soit en combinant un nombre de répétitions inférieur à un seuil défini, dans lequel le seuil correspond à un nombre de répétitions inférieur au nombre de répétitions que le nœud radio émetteur utilisait pour émettre un bloc de données précédent.

2. Procédé revendication 1, comprenant en outre la réception d'informations de programmation indiquant que le nœud radio émetteur (12) a programmé un certain nombre de répétitions du bloc de données (16) à émettre vers le nœud radio récepteur (14), et le décodage réussi du bloc de données (16) avant de recevoir une ou plusieurs des répétitions programmées, et dans lequel ladite émission comprend l'émission de la rétroaction (22) en réponse au décodage réussi du bloc de données (16) et avant de recevoir une ou plusieurs des répétitions programmées.

3. Procédé selon l'une quelconque des revendications 1-2, dans lequel le contenu de la rétroaction accuse réception du décodage réussi du bloc de données (16) et la temporisation de la rétroaction est basée sur le nombre de répétitions du bloc de données (16) que le nœud de radio récepteur (14) a combinées pour décoder avec succès le bloc de données (16).

4. Procédé selon la revendication 3, dans lequel la rétroaction (22) comprend un code préambule dédié non basé sur le contenu sur un canal d'accès aléatoire.

5. Procédé selon la revendication 3, dans lequel la rétroaction (22) est émise sur une ressource radio qui est accordée au nœud radio récepteur (14) et qui est programmée pour se produire avant l'émission d'une ou de plusieurs répétitions du bloc de données (16).

6. Procédé selon la revendication 5, dans lequel le nœud radio récepteur (14) se voit octroyer de multiples ressources radio qui se produisent à des moments différents au cours desquels des répétitions du bloc de données (16) sont programmées pour être émises, en tant que ressources candidates différentes sur lesquelles le nœud radio récepteur (14) est autorisé à émettre la rétroaction.

7. Procédé selon l'une quelconque des revendications 1-2, dans lequel la rétroaction indique non spécifiquement si le nœud radio récepteur (14) a besoin ou non d'un nombre de répétitions inférieur à un nombre de répétitions du bloc de données (16) émises vers le nœud radio récepteur (14).

8. Procédé selon l'une quelconque des revendications 1-2, dans lequel la rétroaction indique spécifiquement un nombre de répétitions, ou une plage de répétitions, dont le nœud radio récepteur (14) a besoin obtenir un décodage de bloc de données réussi.

9. Procédé selon l'une quelconque des revendications 1-2, dans lequel la rétroaction (22) indique si le nœud radio récepteur (14) a besoin ou non d'un nombre de répétitions inférieur à un seuil défini.

10. Procédé selon l'une quelconque des revendications 1-9, dans lequel de multiples répétitions sont incluses au sein d'une émission de demande de répétition automatique hybride donnée, HARQ, vers le nœud radio récepteur (14).

11. Procédé selon la revendication 10, dans lequel le nœud radio récepteur (14) décode avec succès le bloc de données (16) sur la base de la combinaison des répétitions dans une ou plusieurs émissions HARQ initiales avec uniquement une partie des répétitions dans une émission HARQ ultérieure, et dans lequel la rétroaction (22) indique le nombre de répétitions dans ladite partie.

12. Procédé selon l'une quelconque des revendications 1-11, dans lequel le bloc de données (16) est émis sur un canal partagé de liaison descendante physique, PDSCH, en tant qu'émission d'Internet des objets, IoT, à bande étroite.

13. Nœud radio récepteur (14) configuré pour :
recevoir un bloc de données (16) à partir d'un nœud radio émetteur (12) ;
déterminer combien de répétitions du bloc de données (16) le nœud radio récepteur (14) a besoin ou aura besoin de combiner de façon à décoder avec succès le bloc de données (16) ;
sur la base de la détermination, générer une rétroaction (22) indiquant combien de répétitions d'une émission de bloc de données le nœud radio récepteur (14) a besoin de combiner pour obtenir un décodage de bloc de données réussi ; et
émettre la rétroaction (22) vers nœud radio émetteur (12) uniquement lorsque le nœud radio récepteur (14) décode avec succès le bloc de données (16) soit dans une fenêtre temporelle définie depuis l'émission initiale du bloc de données (16), soit en combinant un nombre de répétitions inférieur à un seuil défini, dans lequel le seuil correspond à un nombre de répétitions inférieur au nombre de répétitions que le nœud radio émetteur utilisait pour émettre un bloc de données précédent.

14. Programme informatique comprenant des instructions qui, lorsqu'elles sont exécutées par au moins un processeur d'un nœud, amènent le nœud à effectuer le procédé selon l'une quelconque des revendications 1-12.

15. Support contenant le programme informatique selon la revendication 14, dans lequel le support est un parmi un signal électronique, un signal optique, un signal radio, ou un support de stockage lisible par ordinateur.
